Europäisches Patentamt

(19) European Patent Office

Office européen des brevets

(11) Numéro de publication: **0 041 522**
**B1**

(12) **FASCICULE DE BREVET EUROPEEN**

(45) Date de publication du fascicule du brevet:
**30.05.84**

(51) Int. Cl.³: **B 29 D 27/04,** B 29 C 1/16

(21) Numéro de dépôt: **80902390.6**

(22) Date de dépôt: **05.12.80**

(86) Numéro de dépôt international:
**PCT/FR 80/00177**

(87) Numéro de publication internationale:
**WO 81/01682 (25.06.81** Gazette 81/15)

(54) **MOULE POUR REALISER DES ELEMENTS PROFILES EN MATIERE PLASTIQUE.**

(30) Priorité: **06.12.79 FR 7930006**
**21.11.80 FR 8024810**

(43) Date de publication de la demande:
**16.12.81 Bulletin 81/50**

(45) Mention de la délivrance du brevet:
**30.05.84 Bulletin 84/22**

(84) Etats contractants désignés:
**AT CH DE GB LI LU NL SE**

(56) Documents cités:
**DE - A - 2 428 510**
**FR - A - 2 163 540**
**FR - A - 2 355 984**
**GB - A - 1 131 612**
**GB - A - 1 266 866**
**US - A - 2 916 771**
**US - A - 3 087 207**

(73) Titulaire: **ETS EVIRA, Zone industrielle Nord Rue Philippe Lebon, F-85004 La Roche-Sur-Yon (FR)**

(72) Inventeur: **Pailler, Jean-Yves, 14 Rue de la Garenne, F-17700 Surgeres (FR)**

(74) Mandataire: **Simonnot, Bernard et al, Cabinet Simonnot 49, Rue de Provence, F-75442 Paris Cédex 09 (FR)**

ACTORUM AG

## Description

La présente invention concerne des moules permettant de réaliser par exemple des éléments profilés, des panneaux et des châssis de menuiserie de bâtiment, en matière plastique, notamment en polyuréthanne. L'invention couvre également les éléments profilés et les menuiseries ainsi obtenues.

Dans le domaine du moulage des matières plastiques en vue de la réalisation de profilés et de châssis ouvrants et dormants, on connaît à l'heure actuelle des menuiseries obtenues à l'aide de moules comprenant essentiellement deux demi-moules dont chacun est taillé de manière à présenter directement le profil désiré et peut comporter des rallonges de mise à longueur. Il est clair que ce genre de moule est particulièrement onéreux et que le produit obtenu doit ensuite être rectifié, notamment au niveau des joints entre les rallonges.

On connaît par ailleurs le brevet DE-A No 2428510 qui décrit des demi-moules munis de canaux, mais dont la cavité est usinée à un profil définitif non modifiable. On connaît également le brevet GB-A No 1131612 qui mentionne des demi-moules de forme fixe munis de canaux et insérés entre des plaques ne contribuant aucunement à former le fond de la cavité de moulage ni l'essentiel des canaux.

La présente invention vise à remédier à ces inconvénients en fournissant un moule dans lequel les demi-moules ne comportent pas de rallonges et permettent l'obtention d'une large variété de profilés pour un prix de revient très faible tout en étant faciles à réaliser. En fait, le problème résolu par l'invention consiste essentiellement dans l'obtention d'une large variété de profils à partir d'éléments de base réutilisables, qui sont les sabots, et d'éléments interchangeables, qui sont les seuls à réaliser pour obtenir un profil donné, tous ces éléments pouvant comporter des conduits.

Plus précisément selon l'invention, dans un moule pour réaliser des éléments profilés en matière plastique, notamment en polyuréthanne haute densité à structure fine et à peau intégrée, du type comprenant des demi-moules supérieur et inférieur en alliage léger venu directement de filage, déterminant ensemble l'empreinte d'un élément profilé pouvant comporter un noyau raidisseur et séparés par deux plans de joint parallèles ou coplanaires et situés chacun d'un côté de l'élément profilé à mouler, les deux demi-moules étant respectivement associés à des moyens de serrage tels que les plateaux inclinables d'une presse par l'intermédiaire de moyens de fixation amovible à rainures en T et comportant des conduits pour la circulation d'un fluide de préchauffage et de refroidissement destiné à maintenir la température de formation de la matière moulée à une valeur sensiblement constante, chaque demi-moule est constitué par un sabot, dont la face extérieure comporte lesdits moyens de fixation amovible et dont la face intérieure est parallèle aux plans de joint et forme le fond de l'empreinte, déterminant les surfaces supérieure et inférieure du profil, et par des organes interchangeables de détermination des surfaces latérales du profil, qui sont respectivement fixés sur la face intérieure du sabot latéralement de part et d'autre de l'élément à mouler et qui forment les flancs de l'empreinte, de telle sorte que la mise en regard et en contact jointif des deux demi-moules définit une cavité de moulage dont deux faces parallèles opposées sont constituées par les parties centrales des faces intérieures des sabots correspondants, lesdits sabots et éventuellement certains organes de détermination de profil comportant un ou plusieurs desdits conduits.

En particulier, les organes de détermination de profil peuvent comporter des empreintes auxiliaires permettant la mise en place de pièces métalliques destinées à être rendues solidaires de l'élément profilé lors du moulage, le moule comprenant éventuellement un ou plusieurs organes interchangeables supplémentaires, pouvant coulisser parallèlement à l'un des plans de joint et fixés sur des vérins latéraux.

Selon une forme de réalisation particulière de l'invention, un moule destiné à la réalisation simultanée de plusieurs éléments profilés de même profil, présentant chacun une longueur donnée et des extrémités droites ou d'onglet, présente une grande longueur et comporte des pièces terminales et des pièces de séparation à section droite correspondant à celle de l'empreinte et à extrémités respectivement droites ou d'onglet.

Egalement selon l'invention, dans un moule composite comportant plusieurs moules du type précité, les demi-moules supérieurs et les demi-moules inférieurs sont juxtaposés jointivement deux à deux pour former respectivement un demi-moule composite supérieur et un demi-moule composite inférieur, les moyens de fixation amovible associés à la face extérieure de chaque sabot étant assujettis à un bâti supérieur ou inférieur, rendu solidaire de l'un des plateaux des moyens de serrage et comprenant essentiellement des barres disposées transversalement par rapport aux sabots, les demi-moules supérieurs et inférieurs présentant tous des extrémités droites ou d'onglet.

Selon une première forme possible de réalisation, le moule composite comporte deux ou plusieurs moules dont les demi-moules constitutifs sont respectivement juxtaposés jointivement deux à deux par leurs extrémités droites ou d'onglet au moyen d'un dispositif de maintien et éventuellement de dispositifs antiflexion, chaque dispositif de maintien étant associé aux extrémités jointives de deux demi-moules consécutifs et comprenant une plaquette en acier, qui est fixée sur le bâti supérieur ou inférieur et dont chaque moitié est disposée dans la rainure venue de filage avec la face extérieure du sabot associé, et deux organes d'appui latéraux, qui sont fixés sur ledit bâti en regard de la plaquette et qui portent contre les sabots et leurs organes interchangeables, éventuellement jusqu'au niveau du plan du joint ou au-delà, des baguettes de raidissement amovibles pouvant être logées dans des chambres venues de filage avec les sabots, chaque dispositif antiflexion étant constitué par des organes rendus solidaires dudit bâti et portant de part et d'autre contre les parties intermédiaires des demi-moules situées entre leurs extrémités.

Selon d'autres caractéristiques:

— le moule composite peut comporter deux ou plusieurs moules rectilignes dont les demi-moules constitutifs sont respectivement juxtaposés jointivement deux à deux par leurs extrémités d'onglet, la plaquette de chaque dispositif de maintien se présentant sous la forme d'une équerre et ses deux organes d'appui latéraux formant un ensemble cornier disposé à l'extérieur des extrémités jointives des deux demi-moules concernés;

— le moule composite peut comporter deux ou plusieurs moules rectilignes dont les demi-moules constitutifs sont respectivement juxtaposés jointivement deux à deux par leurs extrémités droites, la plaquette de chaque dispositif de maintien étant rectiligne et ses deux organes d'appui latéraux étant rectilignes et disposés de part et d'autre des extrémités jointives des deux demi-moules concernés;

— le moule composite peut comporter au moins un moule curviligne dont les demi-moules constitutifs présentent des extrémités radiales droites qui sont respectivement juxtaposées jointivement avec les extrémités transversales droites des demi-moules constituant les moules rectilignes adjacents, les sabots et les organes interchangeables de détermination de profil des deux demi-moules de chaque moule curviligne étant cintrés, notamment en demi-cercle, dans un plan correspondant à un plan de joint ou parallèle à ce dernier, la plaquette faisant partie de chaque dispositif de maintien étant mi-rectiligne et mi-curviligne.

Selon une seconde forme possible de réalisation, le moule composite comporte plusieurs moules rectilignes dont les demi-moules constitutifs sont respectivement juxtaposés jointivement deux à deux par leurs faces latérales, des vérins latéraux étant fixés sur chaque bâti et associés aux faces latérales extérieures des deux demi-moules situés latéralement le plus à l'extérieur, chaque demi-moule composite ainsi formé comportant des pièces terminales et des organes de détermination de profil fixés sur la face intérieure des sabots, une feuille ou tôle d'un alliage léger étant rapportée sur la face intérieure de chaque demi-moule composite.

Selon d'autres caractéristiques du moule composite ci-dessus:

— les demi-moules peuvent être cintrés longitudinalement;

— les demi-moules peuvent être cintrés transversalement.

D'autres avantages de la présente invention ressortiront mieux de la description qui va suivre, faite en regard des dessins annexés sur lesquels:

la fig. 1 représente une vue en coupe transversale des parties essentielles d'un moule pour éléments profilés selon l'invention;

la fig. 2 représente une vue en coupe brisée partielle d'une partie angulaire d'un demi-moule composite pour châssis monobloc selon l'invention;

la fig. 3 représente une vue de dessus des éléments essentiels de la partie angulaire correspondant à la coupe visible sur la fig. 2;

la fig. 4 représente une vue de dessus d'une partie d'un moule composite comportant deux moules rectilignes juxtaposés par leurs extrémités droites, les barres des bâtis ayant été enlevées;

la fig. 5 représente une vue en coupe transversale suivant la ligne V-V de la fig. 4;

la fig. 6 représente une vue identique à celle de la fig. 4, le moule composite comportant un moule rectiligne et un moule curviligne;

la fig. 7 représente une vue en coupe transversale partielle d'un moule composite comportant plusieurs moules rectilignes juxtaposés par leurs faces latérales;

la fig. 8 représente une vue latérale partielle du moule composite représenté sur la fig. 7;

la fig. 9 représente une vue identique à celle de la fig. 7, les organes de détermination de profil étant modifiés en vue d'obtenir un élément à profil convexe;

la fig. 10 représente une vue identique à celles des fig. 7 et 9, les barres des bâtis étant coudées;

la fig. 11 représente une vue identique à celles des fig. 7, 9 et 10, les moules étant cintrés transversalement, et

la fig. 12 représente une vue identique à celle de la fig. 8, les moules étant cintrés longitudinalement.

Sur ces dessins, les mêmes références désignent les mêmes éléments.

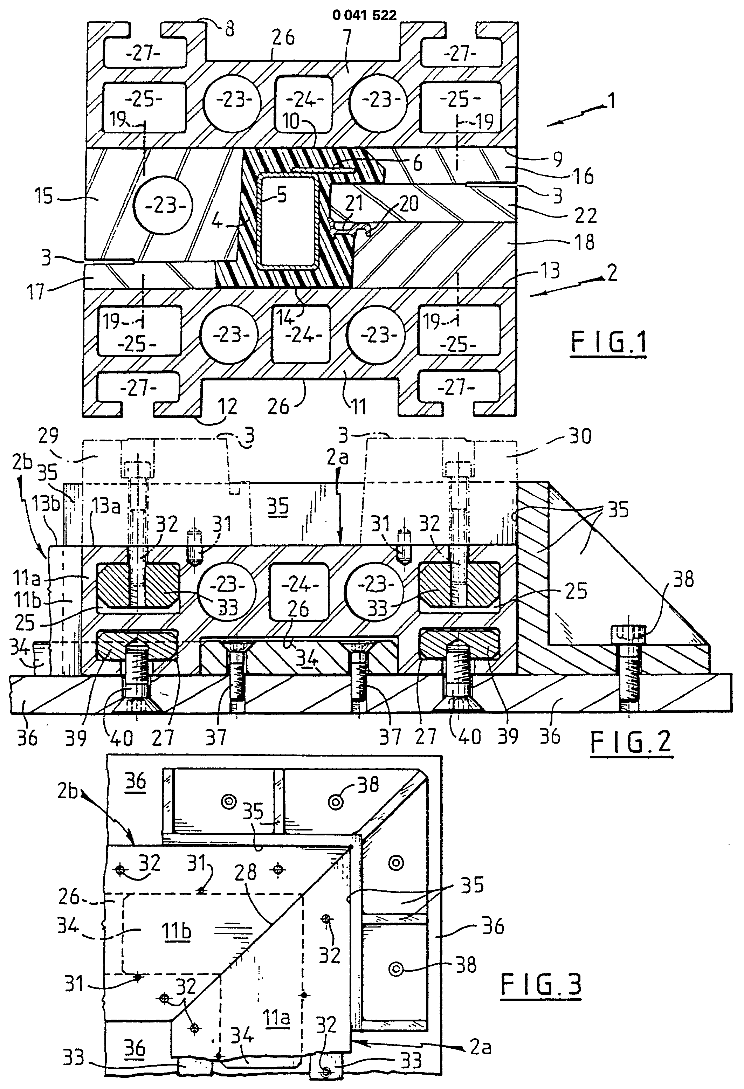

En se référant à la fig. 1, un moule selon l'invention est du type comprenant des demi-moules supérieur et inférieur, désignés dans leur ensemble par 1 et par 2 et séparés par deux plans de joint 3 parallèles ou coplanaires et situés chacun d'un côté de l'élément profilé à mouler. Ces deux demi-moules sont respectivement associés à des moyens de serrage tels que les plateaux d'une presse, qui ne sont pas représentés sur les dessins et qui sont de préférence inclinables et orientables. Lors du serrage, les demi-moules 1 et 2 déterminent ensemble l'empreinte d'un élément profilé, qui est désigné par 4 et qui peut comporter un noyau raidisseur 5. Ce noyau raidisseur est de préférence creux et constitué par de l'acier et, en fonction du profil prévu pour l'élément moulé 4, il peut comporter une ou plusieurs ailes rapportées 6.

Les divers éléments profilés qui peuvent être réalisés selon l'invention sont constitués par une matière plastique moulée, de préférence un polyuréthanne haute densité à structure fine et à peau intégrée, comme cela sera expliqué plus en détail ci-après.

Selon l'invention, le demi-moule supérieur 1 comprend un sabot 7 dont la face extérieure 8 comporte des moyens de fixation amovible, qui seront détaillés en se référant à la fig. 2, et dont la face intérieure 9 est parallèle aux plans de joint 3 et forme le fond supérieur de l'empreinte, c'est-à-dire la face supérieure 10 du profil de l'élément moulé 4. De la même manière, le demi-moule inférieur 2 comprend un sabot 11 dont la face extérieure 12 comporte des moyens de fixation amovible et dont la face intérieure 13 est parallèle aux plans de joint 3 et forme le fond inférieur de l'empreinte, c'est-à-dire la face inférieure 14 du profil de l'élément moulé 4.

En outre, des organes interchangeables de détermination des surfaces latérales du profil sont respectivement fixés sur la face intérieure 9 ou 13 de chacun des sabots 7 et 11, latéralement de part et d'autre de l'élément 4 à mouler, et forment les flancs de l'empreinte. A titre d'exemple, des organes 15 et 16 de détermination de profil sont fixés sur la face intérieure 9 du sabot supérieur 7, tandis que des organes 17 et 18 sont fixés sur la face intérieure 13 du sabot inférieur 11. Du fait que tous ces organes de détermination de profil sont interchangeables en fonction du profil à obtenir pour l'élément moulé, ils sont fixés sur leurs sabots respectifs, de préférence par des vis représentées par des traits mixtes 19, comme cela sera expliqué plus en détail en se référant à la fig. 2.

Il est à noter que les organes interchangeables en regard, appartenant aux deux demi-moules, tels que les organes 15 et 17, forment l'un des plans de joint 3 tout en déterminant les flancs de l'empreinte. Lorsque cela est nécessaire, les organes de détermination de profil peuvent comporter des empreintes auxiliaires permettant la mise en place de pièces métalliques destinées à être rendues solidaires de l'élément profilé lors du moulage, notamment des paumelles et des éléments de crémone dans le cas d'un élément profilé faisant partie d'un châssis de menuiserie de bâtiment. A titre d'exemple, l'organe interchangeable 18 comporte une empreinte auxiliaire 20 permettant la mise en place d'un porte-joint 21, qui peut être un profilé en alliage léger, l'élément profilé 4 pouvant alors être une pièce d'appui de dormant.

Dans le cas précité, le moule peut comprendre un ou plusieurs organes interchangeables supplémentaires, tels que l'organe 22, destinés à la fois à déterminer une partie des flancs de l'empreinte et à maintenir la ou les pièces métalliques en place avant et pendant le moulage. Pour permettre le démoulage, il est généralement nécessaire que chaque organe supplémentaire puisse coulisser parallèlement à l'un des plans de joint et soit fixé sur des vérins latéraux (non représentés), appartenant par exemple à la presse précédemment mentionnée. De préférence, un organe supplémentaire tel que l'organe 22 est associé au demi-moule inférieur 2 et sa face supérieure forme l'un des plans de joint avec l'organe en regard appartenant au demi-moule supérieur 1.

Selon une particularité essentielle de l'invention, les sabots 7 et 11 et éventuellement certains organes de détermination de profil, tels que l'organe relativement massif 15, comportent un ou plusieurs conduits 23 pour la circulation d'un fluide de préchauffage et de refroidissement destiné à maintenir la température de formation de la matière moulée à une valeur sensiblement constante. Dans le cas du polyuréthanne, on sait que la formation de la matière moulée s'accompagne d'une réaction exothermique atteignant environ 180°C et que l'épaisseur de la peau est fonction de la température à laquelle on maintient le moule. Dans ces conditions, on préfère généralement préchauffer le moule à une température de l'ordre de 55°C avant d'injecter les composants du polyuréthanne et l'on maintient cette température sensiblement constante pendant toute l'opération de moulage et de formation de l'élément moulé.

Par ailleurs, il est possible de traiter le noyau raidisseur 5 avec un produit de liaison destiné à éviter le décollement du polyuréthanne par rapport à l'acier, compte tenu des différences de coefficient de dilatation de ces deux matériaux.

Selon une autre particularité de l'invention, les sabots 7 et 11 ainsi que les organes de détermination de profil, tels que les organes 15 à 18 et 22, sont constitués par un alliage léger permettant des échanges thermiques rapides, par exemple le duralumin, et viennent directement de filage. Compte tenu de la résistance mécanique des filières et de la masse des sabots, chacun de ces derniers est filé de manière à comporter de préférence une chambre centrale 24 et deux chambres latérales 25 encadrant respectivement deux conduits 23. En outre, la face extérieure 8 ou 12 de chacun des sabots 7 et 11 présente une rainure de centrage rectangulaire 26 et deux rainures latérales en T 27, qui constituent les moyens de fixation amovible précédemment mentionnés et qui sont destinées à recevoir la tête d'organes de fixation rendus solidaires des moyens de serrage tels que les plateaux d'une presse. Toutefois, la finalité de ces diverses chambres et rainures venues directement de filage sera mieux comprise ci-après en se référant à la fig. 2.

D'une façon générale, du fait que toutes les parties essentielles du moule selon l'invention sont fabriquées par filage, il est possible d'obtenir des moules de grande longueur et, par conséquent, des éléments profilés présentant eux-mêmes une longueur importante, ces derniers pouvant ensuite être tronçonnés si nécessaire.

Cependant, le moule décrit jusqu'ici en se référant à la fig. 1 est de préférence destiné à la réalisation simultanée de plusieurs éléments profilés de même profil, présentant chacun une longueur donnée et des extrémités droites ou d'onglet. Dans ce cas, le moule selon l'invention présente une grande longueur et comporte des pièces terminales et des pièces de séparation, non représentées, à section droite, correspondant à celle de l'empreinte, et à extrémités respectivement droites ou d'onglet. Les éléments profilés ainsi obtenus peuvent être assemblés avec d'autres éléments profilés présentant respectivement des profils convenables pour former des menuiseries extérieures de bâtiment, notamment des dormants. Il est clair que ces autres éléments profilés sont réalisés au moyen d'un moule selon l'invention dans lequel les organes interchangeables de détermination de profil ont été remplacés selon les profils désirés.

Selon une autre forme de réalisation de l'invention, il est possible d'assembler quatre moules du type précédemment décrit, de manière à obtenir un moule composite destiné à la réalisation simultanée de quatre éléments profilés à profils identiques ou différents formant un cadre ou châssis rectangulaire monobloc, par exemple un ouvrant, utilisable directement en menuiserie extérieure de bâtiment. Dans ce cas, les quatre demi-moules supérieurs et les quatre demi-moules inférieurs présentent de préférence des extrémités d'onglet et sont assemblés deux à deux à l'aide de dispositifs de maintien et éventuellement de dispositifs antiflexion de telle manière que, compte tenu de la longueur des demi-moules, les joints d'onglet respectifs sont rendus hermétiques sous l'effet de la dilatation à la température de moulage.

En se référant aux fig. 2 et 3, une partie angulaire d'un demi-moule composite inférieur selon l'invention comprend deux demi-moules inférieurs 2a et 2b assemblés selon un plan de joint d'onglet 28. Ces demi-moules comprennent évidemment des sabots respectifs 11a et 11b, qui sont identiques aux sabots précédemment décrits, et des organes interchangeables de détermination de profil 29 et 30, qui ont été enlevés sur la fig. 3 et sont représentés schématiquement sur la fig. 2. Il est à noter que ces organes interchangeables 29 et 30, qui présentent un profil correspondant à celui de l'élément profilé désiré, déterminent deux plans de joint 3 parallèles à la face supérieure 13a, 13b des sabots respectifs, comme précédemment décrit en se référant à la fig. 1.

De préférence, la position exacte des organes interchangeables 29 et 30 par rapport à leur sabot associé 11a est déterminée au moyen de pions de centrage 31. Les organes 29 et 30 sont fixés sur ledit sabot 11a à l'aide de vis 32 les traversant, dont la tête est noyée dans l'organe associé et dont la partie filetée se visse, soit directement dans le sabot, soit de préférence dans une baguette ou un plat de raidissement 33 logé dans la chambre 25.

Comme indiqué précédemment, les demi-moules ainsi obtenus sont assemblés deux à deux à l'aide de dispositifs de maintien. Selon l'invention, chaque dispositif de maintien comprend essentiellement un organe de centrage tel qu'une équerre 34 en acier, dont chacune des deux pattes se loge dans la rainure rectangulaire 26 de l'un des sabots, et un ensemble cornier 35 destiné au maintien desdits sabots et fixé sur les moyens de serrage.

L'ensemble cornier 35 peut être du type mécanosoudé à équerres et nervures de raidissement et il est en principe disposé à l'extérieur des demi-moules concernés 2a et 2b, de manière à porter à la fois contre les sabots 11a et 11b et contre leurs organes interchangeables 29 et 30, éventuellement jusqu'au niveau des plans de joint 3 ou au-delà.

Pour faciliter le montage sur des moyens de serrage tels que les plateaux d'une presse, il peut être prévu de monter chaque demi-moule composite sur un bâti tel qu'une platine 36 avant de rendre cette dernière solidaire de l'un des plateaux de la presse. Dans ce cas, l'équerre de centrage 34 et l'ensemble cornier 35 peuvent être respectivement fixés sur la platine 36 à l'aide de vis 37 et 38. En outre, il est possible de monter des baguettes ou des plats de raidissement et de fixation 39 dans les rainures en T 27 et de les maintenir à l'aide de vis 40 traversant la platine 36.

Du fait que les quatre demi-moules ainsi montés peuvent présenter des longueurs importantes et que leurs extrémités sont maintenues comme indiqué précédemment, leurs parties intermédiaires sont susceptibles de se déformer sous l'effet de la dilatation. Dans ce cas, on peut utiliser des plats s'encastrant dans la rainure rectangulaire 26 ainsi que des dispositifs antiflexion, non représentés, constitués par des organes rendus solidaires des moyens de serrage ou du bâti formé par la platine 36 et portant de part et d'autre contre les parties intermédiaires des demi-moules. En outre, il est possible de monter les dispositifs de maintien et les éventuels dispositifs antiflexion lorsque la température de l'ensemble des moules est d'au moins 40° C, ce qui permet d'éviter des déformations trop importantes sous l'effet de la dilatation à la température normale de travail.

A cet égard, le circuit de préchauffage et de refroidissement peut être raccordé et commandé séparément pour chacun des demi-moules concernés de manière à mieux tenir compte des masses relatives de la matière en cours de moulage et de l'alliage léger, afin que l'on obtienne une température plus uniforme pour l'ensemble du moule composite.

Lorsqu'on utilise une presse à plateaux inclinables et orientables, on place évidemment le trou d'injection au niveau le plus bas et le trou d'évent au niveau le plus haut, l'angle des plans de joint du moule par rapport à l'horizontale étant généralement de l'ordre de 60°.

D'après ce qui précède, l'utilisation d'un moule composite tel que décrit permet d'obtenir un châssis rectangulaire monobloc à éléments profilés qui est directement utilisable en menuiserie extérieure de bâtiment, moyennant un simple ébavurage des plans de joint d'onglet, devant être effectué uniquement au niveau des faces supérieure et inférieure 10 et 14 du cadre ainsi obtenu.

Toutefois, le moule composite précédemment décrit ne constitue qu'un cas particulier dans lequel les demi-moules constitutifs sont tous juxtaposés jointivement deux à deux par leurs extrémités d'onglet alors que les demi-moules selon l'invention peuvent aussi bien être juxtaposés deux à deux par des extrémités droites ou par leurs faces latérales.

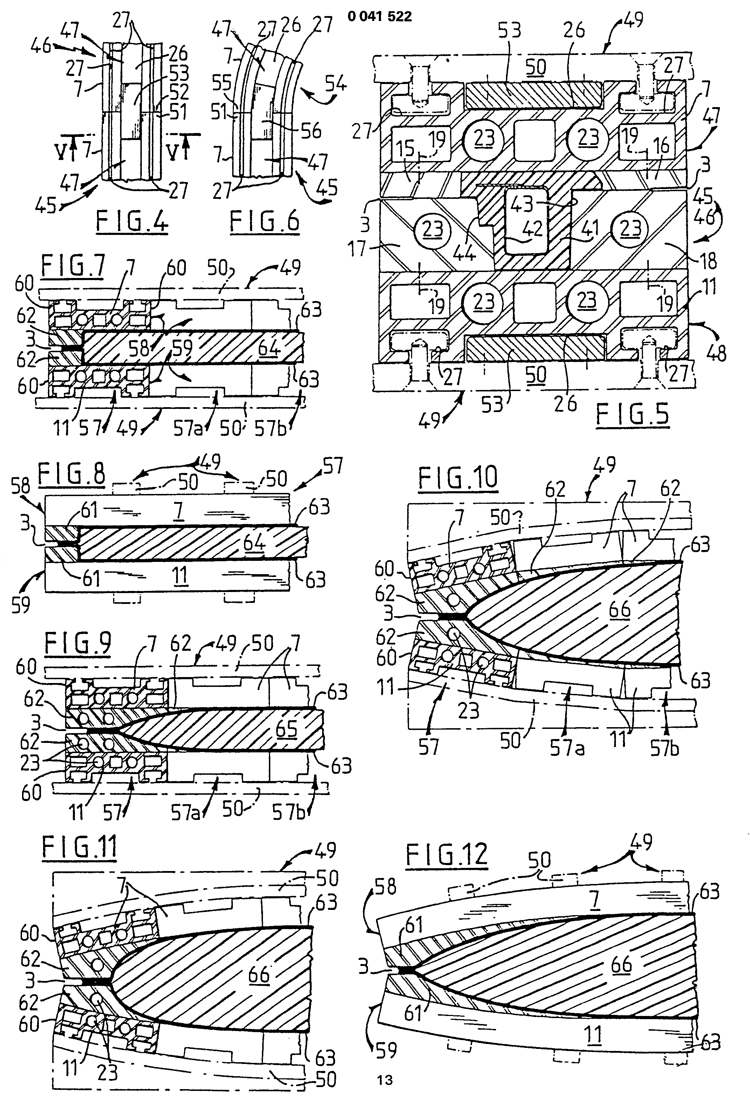

A cet égard, en se référant aux fig. 4 et 5, un moule composite selon l'invention peut être destiné à la réalisation d'un élément profilé d'un châssis de menuiserie de bâtiment, tel qu'un montant 41 comportant un noyau raidisseur 42 et présentant une feuillure intérieure 43 et une double feuillure extérieure 44. Comme cela a déjà été indiqué, le moule composite est du type comportant plusieurs moules rectilignes, tels que les moules 45 et 46, constitués chacun par un demi-moule supérieure 47 et par un demi-moule inférieur 48.

Dans un tel moule composite selon l'invention, les demi-moules supérieurs et les demi-moules inférieurs présentent tous des extrémités droites et sont juxtaposés jointivement deux à deux pour former respectivement un demi-moule composite supérieur et un demi-moule composite inférieur. En outre, les moyens de fixation amovible associés à la face extérieure de chaque sabot 7 ou 11 sont assujettis à un bâti supérieur ou inférieur 49 qui est rendu solidaire de l'un des plateaux des moyens de serrage et qui comprend essentiellement des barres 50 disposées transversalement par rapport aux sabots 7 et 11 et remplaçant avantageusement la platine précitée 36.

Selon une première forme possible de réalisation, le moule composite comporte deux ou plusieurs moules rectilignes, tels que les moules 45 et 46, dont les demi-moules constitutifs 47 ou 48 sont respectivement juxtaposés jointivement deux à deux par leurs extrémités droites 51, 52. Un dispositif de maintien est associé aux extrémités jointives 51, 52 de deux demi-moules consécutifs et comprend une plaquette rectiligne 53 qui est fixée sur le bâti supérieur ou inférieur 49 et dont chaque moitié est disposée dans la rainure 26 venue de filage avec la face extérieure du sabot associé 7 ou 11.

De préférence, chaque dispositif de maintien comporte en outre, au niveau de la plaquette 53, des organes d'appui latéraux tels que des équerres fixées sur les bâtis et portant contre les faces latérales des sabots et des organes de détermination de profil. Ces équerres, qui ne sont pas représentées, peuvent être sensiblement identiques aux équerres 36 décrites en se référant à l'ensemble cornier 35 représenté sur les fig. 2 et 3.

A titre de variante, en se référant à la fig. 6, le moule composite selon l'invention comporte au moins un moule curviligne 54 dont les demi-moules constitutifs présentent des extrémités radiales droites 55 qui sont respectivement juxtaposées jointivement avec les extrémités transversales droites 51 ou 52 des demi-moules constituant les moules rectilignes adjacents 45 ou 46. Dans un tel moule curviligne, les sabots 7 et 11 et les organes interchangeables de détermination de profil 15 à 18 des deux demi-moules sont cintrés, notamment en demi-cercle, dans un plan correspondant à un plan de joint 3 ou parallèle à ce dernier. La plaquette 56 faisant partie de chaque dispositif de maintien est de préférence mi-rectiligne et mi-curviligne. Il est clair que l'on peut ainsi réaliser des châssis de menuiserie de bâtiment, notamment de menuiserie extérieure, comportant par exemple une traverse supérieure en arc de cercle.

Il est également évident que le moule composite pourrait comporter plusieurs moules curvilignes juxtaposés jointivement deux à deux par leurs extrémités, permettant ainsi de réaliser d'autres configurations de châssis.

En se référant aux fig. 7 à 12, selon une seconde forme possible de réalisation, le moule composite comporte plusieurs moules rectilignes 57, 57a, 57b, ..., dont les demi-moules constitutifs 58, 59 sont respectivement juxtaposés jointivement deux à deux par leurs faces latérales 60. Des vérins latéraux (non représentés) sont de préférence fixés sur chaque bâti 49 et portent contre les faces latérales extérieures 60 des deux demi-moules situés latéralement le plus à l'extérieur. Chaque demi-moule composite ainsi formé comporte des pièces terminales 61 et des organes 62 de détermination de profil qui sont fixés sur la face intérieure des sabots 7 et 11. En outre, une feuille ou tôle 63 en un alliage léger est éventuellement rapportée sur la face intérieure de chaque demi-moule composite.

Plus précisément, en se référant aux fig. 7 et 8, le moule composite selon l'invention permet de réaliser une plaque ou un panneau 64 présentant par exemple une épaisseur constante. Dans ce cas, les demi-moules sont juxtaposés dans un plan parallèle à un plan de joint 3, et, de préférence, seuls les sabots 7, 11 des demi-moules situés le plus à l'extérieur comportent des organes 62 de détermination de profil. Il est évident que l'épaisseur et la forme des pièces terminales 61 et des organes 62 permettent de déterminer le profil en section droite du panneau, ce dernier pouvant par exemple présenter un bord périphérique aminci ou renforcé et, éventuellement, une ou plusieurs moulures périphériques. Il est à noter également qu'au lieu d'être monté dans la feuillure d'un châssis réalisé séparément, un tel panneau peut être moulé d'un seul tenant avec les éléments profilés du châssis de manière à former une menuiserie pouvant être utilisée directement.

Un moule composite selon l'invention permet également de réaliser des plaques ou des panneaux présentant une face bombée et une face plane ou concave. Notamment, à titre d'exemple et en se référant à la fig. 9, un tel moule composite permet de réaliser un panneau 65 dont les deux faces sont convexes.

En se référant à la fig. 10, dans le cas où la plaque ou le panneau envisagé 66 présente une épaisseur relativement importante, il est possible de modifier les bâtis 49 de telle sorte que les barres transversales 50 soient légèrement coudées de place en place de manière que les sabots 7, 11 soient juxtaposés par l'arête intérieure de leurs faces latérales 60. Dans ces conditions, il est possible de mouler, par exemple, une plaque 66 du genre planche à voile dont la quille, l'emplanture de mât et, éventuellement, d'autres supports d'accastillage sont insérés avant moulage.

A titre de variante, en se référant aux fig. 11 et 12, le moule composite selon l'invention peut évidemment comporter des demi-moules cintrés longitudinalement et/ou transversalement, les barres transversales 50 des bâtis supérieur et inférieur 49 pouvant alors être coudées ou conformées en arc de cercle.

D'une façon générale, les pièces terminales 61 et les organes de détermination de profil 62 présentant une épaisseur importante peuvent comporter, comme les sabots 7, 11, des conduits 23 destinés à la circulation d'un fluide de préchauffage et de refroidissement. Comme mentionné ci-dessus, tous ces conduits 23 sont de préférence raccordés à un circuit unique, de telle sorte qu'il est aisé de maintenir la température de formation de la matière moulée à une valeur sensiblement constante, permettant ainsi d'obtenir un produit présentant les meilleures qualités.

Il est bien entendu que la présente invention n'a été décrite et représentée qu'à titre explicatif, mais nullement limitatif.

## Revendications

1. Moule pour réaliser des éléments profilés en matière plastique, notamment en polyuréthanne haute densité à structure fine et à peau intégrée, du type comprenant des demi-moules supérieur (1) et inférieur (2) en alliage léger venu directement de filage, déterminant ensemble l'empreinte d'un élément profilé (4) pouvant comporter un noyau raidisseur (5) et séparés par deux plans de joint (3) parallèles ou coplanaires et situés chacun d'un côté de l'élément profilé à mouler, les deux demi-moules étant respectivement associés à des moyens de serrage tels que les plateaux inclinables d'une presse par l'intermédiaire de moyens de fixation amovible à rainures en T (27) et comportant des conduits (23) pour la circulation d'un fluide de préchauffage et de refroidissement destiné à maintenir la température de formation de la matière moulée à une valeur sensiblement constante, moule caractérisé par le fait que chaque demi-moule (1, 2) est constitué par un sabot (7, 11), dont la face extérieure (8, 12) comporte lesdits moyens de fixation amovible et dont la face intérieure (9, 13) est parallèle aux plans de joint et forme le fond de l'empreinte, déterminant les surfaces supérieure (10) et inférieure (14) du profil, et par des organes interchangeables (15, 16, 17, 18) de détermination des surfaces latérales du profil, qui sont respectivement fixés sur la face intérieure du sabot latéralement de part et d'autre de l'élément à mouler et qui forment les flancs de l'empreinte, de telle sorte que la mise en regard et en contact jointif des deux demi-moules définit une cavité de moulage dont deux faces parallèles opposées sont constituées par les parties centrales des faces intérieures des sabots correspondants, lesdits sabots et éventuellement certains organes de détermination de profil comportant un ou plusieurs desdits conduits.

2. Moule suivant la revendication 1, caractérisé par le fait que les organes de détermination de profil comportent des empreintes auxiliaires (20) permettant la mise en place de pièces métalliques (21) destinées à être rendues solidaires de l'élément profilé lors du moulage, le moule comprenant éventuellement un ou plusieurs organes interchangeables supplémentaires (22), pouvant coulisser parallèlement à l'un des plans de joint et fixés sur des vérins latéraux.

3. Moule suivant l'une des revendications 1 ou 2, destiné à la réalisation simultanée de plusieurs éléments profilés de même profil, présentant chacun une longueur donnée et des extrémités droites ou d'onglet, caractérisé par le fait qu'il présente une grande longueur et comporte des pièces terminales et des pièces de séparation à section droite correspondant à celle de l'empreinte et à extrémité respectivement droites ou d'onglet.

4. Moule composite comportant plusieurs moules suivant l'une des revendications 1 ou 2, caractérisé par le fait que les demi-moules supérieurs et les demi-moules inférieurs sont juxtaposés jointivement deux à deux pour former respectivement un demi-moule composite supérieur et un demi-moule composite inférieur, les moyens de fixation amovible associés à la face extérieure de chaque sabot étant assujettis à un bâti (49) supérieur ou inférieur, rendu solidaire de l'un des plateaux des moyens de serrage et comprenant essentiellement des barres (50) disposées transversalement par rapport aux sabots, les demi-moules supérieurs et inférieurs présentant tous des extrémités droites ou d'onglet.

5. Moule composite suivant la revendication 4, caractérisé par le fait qu'il comporte deux ou plusieurs moules dont les demi-moules constitutifs sont respectivement juxtaposés jointivement deux à deux par leurs extrémité droites ou d'onglet au moyen d'un dispositif de maintien et éventuellement de dispositifs antiflexion, chaque dispositif de maintien étant associé aux extrémités jointives de deux demi-moules consécutifs et comprenant une plaquette en acier (34, 53, 56), qui est fixée sur le bâti (36, 49) supérieur ou inférieur et dont chaque moitié est disposée dans la rainure (26) venue de filage avec la face extérieure du sabot associé, et deux organes d'appui latéraux, qui sont fixés sur ledit bâti en regard de la plaquette et qui portent contre les sabots et leurs organes interchangeables, éventuellement jusqu'au niveau des plans de joint ou au-delà, des baguettes de raidissement amovibles (33) pouvant être logées dans des chambres (25) venues de filage avec les sabots, chaque dispositif antiflexion étant constitué par des organes rendus solidaires dudit bâti et portant de part et d'autre contre les parties intermédiaire des demi-moules situées entre leurs extrémités.

6. Moule composite suivant la revendication 5, caractérisé par le fait qu'il comporte deux ou plusieurs moules rectilignes dont les demi-moules constitutifs (2a, 2b) sont respectivement juxtaposés jointivement deux à deux par leurs extrémités d'onglet (28), la plaquette de chaque dispositif de maintien se présentant sous la forme d'une équerre (34) et ses deux organes d'appui latéraux formant un ensemble cornier (35) disposé à l'extérieur des extrémités jointives des demi-moules concernés.

7. Moule composite suivant la revendication 5, caractérisé par le fait qu'il comporte deux ou plusieurs moules rectilignes (45, 46) dont les demi-moules constitutifs (47, 48) sont respectivement juxtaposés jointivement deux à deux par leurs extrémités droites (51, 52), la plaquette (53) de chaque dispositif de maintien étant rectiligne et ses deux organes d'appui latéraux étant rectilignes et disposés de part et d'autre des extrémités jointives des deux demi-moules concernés.

8. Moule composite suivant la revendication 7, caractérisé par le fait qu'il comporte au moins un moule curviligne (54) dont les demi-moules constitutifs présentent des extrémités radiales droites (55) qui sont respectivement juxtaposées ·jointivement avec les extrémités transversales droites (51) des demi-moules constituant les moules rectilignes adjacents (45), les sabots et les organes interchangeables de détermination de profil des deux demi-moules de chaque moule curviligne étant cintrés, notamment en demi-cercle, dans un plan correspondant à un plan de joint ou parallèle à ce dernier, la plaquette (56) faisant partie de chaque dispositif de maintien étant mi-rectiligne et mi-curviligne.

9. Châssis monobloc comportant plusieurs éléments profilés à profils identiques ou différents réalisés simultanément au moyen d'un moule composite suivant l'une des revendications 6 à 8.

10. Moule composite suivant la revendication 4, caractérisé par le fait qu'il comporte plusieurs moules rectilignes (57, 57a, 57b, ...), dont les demi-moules constitutifs (58, 59) sont respectivement juxtaposés jointivement deux à deux par leurs faces latérales (60), des vérins latéraux étant fixés sur chaque bâti et associés aux faces latérales extérieures (60) des deux demi-moules situés latéralement le plus à l'extérieur, chaque demi-moule composite ainsi formé comportant des pièces terminales (61) et des organes (62) de détermination de profil fixés sur la face intérieure des sabots, une feuille ou tôle (63) d'un alliage léger étant rapportée sur la face intérieure de chaque demi-moule composite.

11. Moule composite suivant la revendication 10, caractérisé par le fait que les demi-moules sont cintrés longitudinalement.

12. Moule composite suivant la revendication 10, caractérisé par le fait que les demi-moules sont cintrés transversalement.

## Patentansprüche

1. Form zur Herstellung profilierter Elemente aus Kunststoff, insbesondere aus Polyurethan hoher Dichte mit feiner Struktur und integrierter Haut, bestehend aus einer oberen (1) und einer unteren (2) Halbform aus einer leichten, direkt stranggepressten Legierung, die zusammen den Abdruck eines profilierten Elementes (4) bilden, das einen Verstärkungskern aufweisen kann, und von zwei parallelen bzw. koplanaren, je auf einer Seite des zu formenden profilierten Elementes angeordneten Verbindungsebenen (3) getrennt sind, wobei die beiden Halbformen zugehörigen Spannmitteln, beispielsweise schrägsstellbaren Presseplatten mittels eine lösbare Verbindung herstellender Organe zugeordnet sind, welche T-Nuten (27) und Leitungen (23) zum Kreislauf einer für die Aufrechterhaltung, an einem im wesentlichen konstanten Wert, der Bildungstemperatur des geformten Materials bestimmten Vorwärm- und Kühlflüssigkeit, aufweisen, dadurch gekennzeichnet, dass jede Halbform (1, 2) aus einem Lagerbock (7, 11), dessen Aussenseite (8, 12) die eine losbäre Verbindung herstellenden Organe besitzt und dessen Innenseite (9, 13) zu den Verbindungsebenen parallel ist und den Boden des Abdruckes bildet, wobei sie die Ober- (10) und Unterseite (14) des Profils begrenzt, und aus auswechselbaren Stücken (15, 16, 17, 18) zur Festlegung der Profilseitenflächen, die je an der Innenseite des Lagerbocks seitlich beiderseits des zu formenden Elementes befestigt sind und die Seitenflanken des Abdruckes derart bilden, dass die Gegenüberstellung und Verbindungsanlage der beiden Halbformen einen Formungshohlraum begrenzt, dessen beide parallelen, gegenüberliegenden Seiten durch die Mittelbereiche der Innenseiten der entsprechenden Lagerböcke gebildet sind, besteht, wobei die Lagerböcke und gegebenenfalls bestimmte Teile zur Festlegung des Profils eine oder mehrere der besagten Leitungen aufweisen.

2. Form nach Anspruch 1, dadurch gekennzeichnet, dass die Teile zur Festlegung des Profils mit Hilfsabdrücken (20) versehen sind, die es erlauben, mit dem profilierten Element beim Formen zu verbindende Metallstücke einzusetzen, wobei die Form gegebenenfalls ein oder mehrere zusätzliche auswechselbare Organe (22) aufweist, die parallel zu der einen Verbindungsebene gleiten können und an seitlichen Kolben-Zylinder-Einheiten befestigt sind.

3. Form nach einem der Ansprüche 1 oder 2, bestimmt für die gleichzeitige Herstellung mehrerer Profilelemente gleicher Gestaltung, von denen jedes eine gegebene Länge und gerade oder schräge Enden besitzt, dadurch gekennzeichnet, dass sie eine grosse Länge aufweist und mit gerade bzw. schräge Enden aufweisenden End- und Teilungsstücken, deren Querschnitt mit dem Querschnitt des Abdruckes übereinstimmt, versehen ist.

4. Verbundform aus mehreren Formen nach einem der Ansprüche 1 oder 2, dadurch gekennzeichnet, dass die oberen Halbformen und die unteren Halbformen zur Bildung einer oberen Verbundhalbform bzw. einer unteren Verbundhalbform nebeneinander paarweise verbunden sind, wobei die der Aussenseite jedes Lagerbocks zugeordneten, eine lösbare Verbindung herstellenden Mittel an einem oberen oder unteren Gestell (49) fest verbunden sind, das mit der einen Platte der Spannmittel starr verbunden ist und im wesentlichen aus gegenüber den Lagerböcken quer angeordneten Stangen (50) besteht, wobei alle oberen und unteren Halbformen gerade oder schräge Enden aufweisen.

5. Verbundform nach Anspruch 4, dadurch gekennzeichnet, dass sie aus zwei oder mehrereren Formen besteht, deren Halbformen mittels einer Haltevorrichtung und gegebenenfalls eine Biegung verhindernder Vorrichtungen mit ihren geraden bzw. schrägen Enden jeweils nebeneinander paarweise verbunden sind, wobei jede Haltevorrichtung den Verbindungsenden zweier einanderfolgender Halbformen zugeordnet ist und aus einer Stahlplatte (34, 53, 56), die am oberen oder unteren Gestell (36, 49) befestigt ist und deren jede Hälfte in der zusammen mit der Aussenseite des zugehörigen Lagerbocks stranggepressten Nut (26) liegt, und aus zwei seitlichen, am Gestell gegenüber der Platte befestigten Stützelementen, die von den Lagerböcken und ihren auswechselbaren Stücken, gegebenenfalls bis zur Höhe oder jenseits der Höhe des Verbindungsebenen getragen sind, besteht, und wobei lösbare Versteifungsleisten (33) in zusammen mit den Lagerböcken stranggepressten Räumen (25) untergebracht werden können, ferner wobei jede eine Biegung verhindernde Vorrichtung sich aus mit dem Gestell verbundenen, beiderseits von den zwischen den Enden der Halbformen angeordneten Zwischenbereichen gestützten Organe zusammensetzt.

6. Verbundform nach Anspruch 5, dadurch gekennzeichnet, dass sie zwei oder mehrere geradlinige Formen aufweist, deren Halbformen (2a, 2b) paarweise durch ihre schrägen Enden (28) jeweils nebeneinander verbunden sind, wobei die Platte jeder Haltevorrichtung in Form eines Winkels (34) ausgebildet ist und ihre beiden seitlichen Stützelemente eine ausserhalb der Verbindungsenden der betreffenden Halbformen gelegene Winkeleinheit (35) bilden.

7. Verbundform nach Anspruch 5, dadurch gekennzeichnet, dass sie zwei oder mehrere geradlinige Formen (45, 46) aufweist, deren Halbformen (47, 48) paarweise durch ihre geraden Enden (51, 52) jeweils nebeneinander verbunden sind, wobei die Platte (53) jeder Haltevorrichtung geradlinig ist und ihre beiden seitlichen Stützelemente geradlinig sind und beiderseits der Verbindungsenden der beiden betreffenden Halbformen angeordnet sind.

8. Verbundform nach Anspruch 7, dadurch gekennzeichnet, dass sie zumindest eine bogenförmige Form (54) aufweist, deren Halbformen geradlinige Radialenden (55) besitzen, die jeweils neben den querverlaufenden, geradlinigen Enden (51) der die angrenzenden geradlinigen Formen (45) bildenden Halbformen mit diesen Enden verbunden sind, wobei die Lagerböcke und die auswechselbaren Teile zur Festlegung des Profils der beiden Halbformen jeder bogenförmigen Form in einer einer Verbindungsebene entsprechenden, bzw. zu dieser parallelen Ebene gebogen, insbesondere halbkreisförmig ausgebildet sind, wobei die jeder Haltevorrichtung angehörende Platte (56) halbgeradlinig und halbbogenförmig gestaltet ist.

9. Einteiliges Gestell mit mehreren, gleichzeitig mittels einer Verbundform nach irgendeinem der Ansprüche 6 bis 8 hergestellten profilierten Elementen gleichen oder unterschiedlichen Profils.

10. Verbundform nach Anspruch 4, dadurch gekennzeichnet, dass sie mehrere geradlinige Formen (57, 57a, 57b usw.) umfasst, deren Halbformen (58, 59) paarweise durch ihre Seitenflächen (60) jeweils nebeneinander verbunden sind, wobei seitliche Kolben-Zylinder-Einheiten an jedem Gestell befestigt sind und mit den äusseren Seitenflächen (60) der beiden, seitlich am äussersten gelegenen Halbformen zusammenwirken, wobei jede derart gebildete Verbundhalbform Endstücke (61) und an der Innenseite der Lagerböcke befestigte Organe (62) zur Festlegung des Profils aufweist, wobei ferner eine Folie bzw. Blech (63) aus einer Leichtlegierung an die Innenseite jeder Verbundhalbform angebracht ist.

11. Verbundform nach Anspruch 10, dadurch gekennzeichnet, dass die Halbformen in Längsrichtung gebogen sind.

12. Verbundform nach Anspruch 10, dadurch gekennzeichnet, dass die Halbformen in Querrichtung gebogen sind.

**Claims**

1. A mold for forming profiled elements made from a plastic material, more especially from high-density polyurethane with fine structure and integrated skin, of a type comprising two upper (1) and lower (2) half molds made from an extruded light alloy, defining together the impression of a profiled element (4) which may comprise a stiffening core (5) and separated by two parallel or coplanar joining planes (3) each situated on one side of the profiled element to be molded, the two half molds being respectively associated with clamping means such as the inclinable plates of a press through removable securing means with T-shaped grooves (27) and comprising ducts (23) for the circulation of a preheating and cooling fluid for maintaining the formation temperature of the molded material at a substantially constant value, which mold is characterized by the fact that each half mold (1, 2) is formed by a shoe (7, 11) whose outer face (8, 12) comprises said removable securing means and whose inner face (9, 13) is parallel to the joining planes and forms the bottom of the impression, defining the upper (10) and lower (14) surfaces of the profile, and interchangeable members (15, 16, 17, 18) defining the lateral surfaces of the profile, which are fixed respectively to the inner face of the shoe laterally on each side of the element to be molded and which form the sides of the impression, so that the two half molds positioned opposite each other and in jointing contact define a molding cavity whose two opposite parallel faces are formed by the central parts of the inner faces of the corresponding shoes, said shoes and possibly some profile defining members comprising one or more of said ducts.

2. The mold according to Claim 1, characterized by the fact that the profile-defining members comprise auxiliary impressions (20) for positioning the metal pieces (21) intended to be firmly secured to the profiled element during molding, the mold comprising if required one or more additional members (22) adapted to slide parallel to one of the joining planes and fixed to lateral-actuating cylinders.

3. The mold according to Claim 1 or 2, for simultaneously producing several profiled elements having the same profile, each having a given length and mitered or right-angled ends, characterized by the fact that it has a great length and comprises endmost pieces and separation pieces with cross-section corresponding to that of the impression and with respectively right-angled or mitered ends.

4. A composite mold comprising several molds according to Claim 1 or 2, characterized by the fact that the upper half molds and the lower half molds are jointingly juxtaposed two by two so as to form respectively a composite upper half mold and a composite lower half mold, the removable securing means associated with the outer face of each shoe being firmly secured to an upper or lower frame (49) firmly secured to one of the plates of the clamping means and comprising essentially bars (50) disposed transversely with respect to the shoes, the upper and lower half molds all having right-angled or mitered ends.

5. The composite mold according to Claim 4, characterized by the fact that it comprises two or more molds whose component half molds are respectively juxtaposed jointingly two by two by their right-angled or mitered ends by means of a holding device and possibly antiflexion devices, each holding device being associated with the jointing ends of two consecutive half molds and comprising a steel plate (34, 53, 56), which is fixed to the upper or lower frame (36, 49) and each half of which is disposed in the integrally extruded groove (26) with the outer face of the associated shoe, and two lateral bearing members which are fixed to said frame opposite the plate and which bear against the shoes and their interchangeable members, possibly as far as the level of the joining planes or therebeyond, removable stiffening rods (33) being possibly housed in chambers (25) integrally molded with the shoes, each antiflexion device being formed by members integral with said frame and bearing on each side against the intermediate parts of the half molds situated between their ends.

6. The composite mold according to Claim 5, characterized by the fact that it comprises two or more rectilinear molds whose component half molds (2a, 2b) are respectively juxtaposed jointingly two by two by their mitered ends (28), the plate of each holding device being in the form of a right-angled bracket (74) and its two lateral bearing members forming a bracket assembly (35) disposed inside the jointing ends of the half molds concerned.

7. The composite mold according to Claim 5, characterized by the fact that it comprises two or more rectilinear molds (45, 46) whose component half molds (47, 48) are juxtaposed respectively jointingly two by two by their right-angled ends (51, 52), the plate (53) of each holding device being rectilinear and its lateral bearing members being rectilinear and disposed on each side of the jointing ends of the two half molds concerned.

8. The composite mold according to Claim 7, characterized by the fact that it comprises at least one curvilinear mold (54) whose component half molds have right-angled radial ends (55) which are respectively juxtaposed jointingly with the right-angled transverse ends (51) of the half molds forming the adjacent rectilinear molds (45), the shoes and the interchangeable profile defining members of the two half molds of each curvilinear mold being bent, more especially in a semicircle, in a plane corresponding to a joining plane or parallel thereto, the plate (56) forming part of each holding device being half rectilinear and half curvilinear.

9. A one-piece molding box comprising several profiled elements with identical or different profiles formed simultaneously by means of a composite mold according to any one of Claims 6 to 8.

10. The composite mold according to Claim 4, characterized by the fact that it comprises several rectilinear molds (57, 57a, 57b, etc.) whose component half molds (58, 59) are respectively juxtaposed jointingly two by two by their lateral faces (60), lateral-actuation cylinders being fixed to each frame and associated with the outer lateral faces (60) of the two half molds situated laterally the outermost, each composite half mold thus formed comprising endmost pieces (61) and profile-defining members (62) fixed to the inner face of the shoes, a sheet or plate (63) of a light alloy being inserted against the inner face of each composite half mold.

11. The composite mold according to Claim 10, characterized by the fact that the half molds are bent longitudinally.

12. The composite mold according to Claim 10, characterized by the fact that the half molds are bent transversely.

FIG.1

FIG.2

FIG.3

FIG.4  FIG.6

FIG.5

FIG.7

FIG.8

FIG.9

FIG.10

FIG.11

FIG.12

13